# EUROPÄISCHE PATENTSCHRIFT

(11) **EP 2 307 700 B1**
(45) Veröffentlichungstag und Bekanntmachung des Hinweises auf die Patenterteilung: **16.11.2011**
(21) Anmeldenummer: 09753839.1
(22) Anmeldetag: 25.05.2009
(51) Int. Cl.: F02N 11/08, F02N 15/06

(54) **ISOLIERTER HALTEFLANSCH FÜR EINE ELEKTRISCHE MASCHINE**
INSULATED HOLDING FLANGE FOR AN ELECTRIC MACHINE
BRIDE DE MAINTIEN ISOLÉE POUR UNE MACHINE ÉLECTRIQUE

(30) Priorität: 30.05.2008 DE 102008002102
(43) Veröffentlichungstag der Anmeldung: 13.04.2011
(73) Patentinhaber: Robert Bosch GmbH, 70442 Stuttgart (DE)
(72) Erfinder: WANNER, Hartmut, 71083 Herrenberg-Oberjesingen (DE); DAURER, Uwe, 70806 Kornwestheim (DE); NEUMANN, Oliver, 74074 Heilbronn (DE); RILL, Viktor, 71735 Eberdingen (DE)
(86) Internationale Anmeldenummer: PCT/EP2009/056270
(87) Internationale Veröffentlichungsnummer: WO 2009/144184

(56) Entgegenhaltungen:
- EP-A- 1 289 099
- WO-A-02/075896
- DE-A1- 3 500 723
- DE-A1-102006 038 350
- US-A1- 2004 000 822

## Beschreibung

Die Erfindung bezieht sich auf einen Halteflansch für eine elektrische Maschine, insbesondere für einen Starter einer Verbrennungskraftmaschine, wobei der Halteflansch als Isolierteil ausgebildet ist und zumindest teilweise aus einem elektrisch isolierenden Material hergestellt ist oder ein auf dem Halteflansch angeordnetes Isolierelement aufweist. Die Erfindung bezieht sich ferner auf eine elektrische Maschine, insbesondere einen Starter, für eine Verbrennungskraftmaschine mit einem Gehäuse und mit einem Lagerschild, an dem ein Befestigungsflansch mit einem elektrisch isolierenden Halteflansch zur Befestigung an der Verbrennungskraftmaschine ausgebildet ist.

Starter müssen für Bahn- und Schiffsanwendungen isoliert aufgebaut sein, d.h. das Bordnetz darf an keiner Stelle eine Potentialanbindung an den Verbrennungsmotor haben. Zu diesem Zweck wird bei diesen Applikationen vor dem Start oder permanent der Isolationswiderstand der Anlage durch sogenannte Isolationswächter geprüft. Der Widerstand von Batterieminus zum Startergehäuse darf dabei nicht unter 20 kΩ absinken.

Elektrisch isoliert aufgebaute Starter erfüllen diese Aufgabe nur in einem kurzen Zeitraum über wenige 1000 Schaltzyklen.

Elektrisch isoliert aufgebaute Starter haben einen vollständig gegen das Startergehäuse elektrisch isolierten Stromkreis. Der Pluspol der Batterie ist dabei an die Klemme 30 und der Minuspol an die Klemme 31 des Starters angeschlossen. Das Gehäuse wird nicht für die Stromführung, wie bei Massestartern, verwendet. Diese Isolation kann der Starter aber nur begrenzt aufrechterhalten, da durch den Kohlebürstenabrieb im Bereich des Kommutators eine leitende Verbindung der Potentiale zum Gehäuse stattfindet und die Isolation insoweit aufgehoben ist, so dass die Isolationswächter anschlagen. Die Funktion des Starters ist dadurch nicht beeinträchtigt.

Eine andere Bauform ist der elektrisch isolierende Halteflansch mit Drehfunktion. Das Lagerschild vom A-Lager des Starters ist dabei aus zwei Komponenten aufgebaut. Das Lagerschild ist aus einem modifizierten A-Lagerschild und aus einem an diesem A-Lagerschild drehbar befestigten Flansch hergestellt, mit dem der Starter am Verbrennungsmotor angeschraubt wird. Da der Halteflansch drehbar auf dem Lagerschild angeschraubt werden kann, wird er auch als Drehflansch bezeichnet. Ein solcher Isoflansch isoliert den Starter zusätzlich elektrisch gegen den Verbrennungsmotor durch seinen Aufbau aus elektrisch isolierenden Materialien. Diese Variante kann den Isolationswiderstand des Starters gegenüber dem Motor dauerhaft aufrechterhalten, sofern keine extremen Umweltbedingungen auf die mechanische Verbindung einwirken. Der Isoflansch ist beispielsweise mit einer Kunststoffumspritzung versehen, die auf der Starterseite große Kriechwege realisiert. Ein solcher Halteflansch ist beispielsweise aus der DE 10 2006 038 350 A1 bekannt.

Ein Starter wird über einen sogenannten isolierten Halteflansch, kurz Isoflansch, an den Motor angeschraubt, der die elektrisch isolierende Aufgabe über die gesamte Lebensdauer erfüllt. Da das Lagerschild mit einem Kegelstumpf aus dem Isolationsflansch in Richtung des Verbrennungsmotors hervorragt, sind Kriechstrecken für den elektrischen Strom im Befestigungsbereich zum Motorblock deutlich kürzer. Der Befestigungsbereich wird auch Einpass genannt. Durch extreme Schmutzablagerungen an diesem Bereich des Einpasses aufgrund von Metallabrieb vom Zahnkranz, Staub, Öl und eindringender Feuchtigkeit kann der Isolationswiderstand unter den erlaubten Wert absinken, was unerwünscht ist.

Es ist Aufgabe der Erfindung, einen Halteflansch und eine elektrische Maschine der eingangs genannten Art derart weiterzubilden, dass eine elektrische Maschine, die an einem Verbrennungsmotor mittels eines Halteflanschs befestigt ist, gegenüber diesem über die gesamte Lebensdauer sicher elektrisch isoliert ist.

Erfindungsgemäß wird die Aufgabe durch den Gegenstand der Patentansprüche 1 und 6 gelöst. Vorteilhafte Weiterbildungen ergeben sich aus den abhängigen Ansprüchen.

Ein Erfindungsgedanke ist, das Isolierteil des Halteflansches so zu verlängern, dass das Isolierteil über den bisher elektrisch frei zugänglichen Kegelstumpf ragt, wenn der Starter mittels des A-Lagerschilds am Motorblock befestigt ist.

Die Aufgabe wird mit einem Halteflansch dadurch gelöst, dass das Isolierteil des Halteflansches verlängert mit einer Kappe über einer Außenfläche eines Lagerschilds von einem Lager der elektrischen Maschine ausgebildet ist. Somit haben die sich bildenden Schmutzablagerungen, die eine elektrische Leitung erzeugen könnten, im Bereich des Einpasses des Halteflansches mit einem sogenannten A-Lagerschild keinen Einfluss auf den geforderten Isolationswiderstand mehr.

Um Ressourcen zu schonen, ist die Kappe des Halteflansches entsprechend der äußeren Form des A-Lagerschilds kegelstumpfförmig und direkt über diesem parallel ausgebildet und insbesondere bis zu einem Ritzel vorgezogen. Somit wird wenig Material eingesetzt und das A-Lagerschild ist umfassend bis zum sich bewegenden Bauteil elektrisch abgeschirmt. Die elektrische Kriechstrecke, die ohne die Kappe nur wenige Millimeter groß ist, verlängert sich durch die Kappe auf mehrere Zentimeter.

Aus Gründen einer einfachen Montage ist der Halteflansch mit der Kappe bevorzugt einteilig hergestellt.

Aus Herstellungsgründen kann es gemäß einer alternativen besonderen Ausführungsform vorteilhaft sein, den Halteflansch mit der Kappe zweiteilig herzustellen.

Vorteilhafterweise sind der Halteflansch und die Kappe aus einem elektrisch isolierenden Material, insbesondere einer Keramik, aus Kunststoff und/oder aus einem elektrisch isolierenden Verbundwerkstoff hergestellt. Somit wird sicher verhindert, dass eine unerwünschte elektrische Verbindung im Laufe der Lebenszeit zwischen der elektrischen Maschine, insbesondere dem Starter, und dem Verbrennungsmotor zustande kommt.

Die Aufgabe wird auch mit einer elektrischen Maschine dadurch gelöst, dass die Außenfläche des Lagerschilds mit einem elektrisch isolierenden Überzugsmaterial ausgebildet ist. Das Ziel, möglichst lange Kriechwege an dem Kegelstumpf des Lagerschilds zu erzeugen, kann somit durch einen Mantel oder eine Schicht geschaffen werden, die den bisher elektrisch frei zugänglichen Kegelstumpf überdeckt.

Gemäß einer besonders bevorzugten Ausführungsform ist die Außenfläche des so genannten A-Lagerschilds mit einem Halteflansch gemäß oben beschriebenen Merkmalen, d.h. mit einer Kappe über der Außenfläche des A-Lagerschilds, elektrisch isoliert. Somit wird das Lagerschild abhängig von den technischen Anforderungen, wie sie beispielsweise bei Bahn- oder Schiffsanwendungen gefordert werden, mit einem erfindungsgemäßen Halteflansch erst kurz vor der Endmontage ausgeführt. Natürlich ist der Halteflansch auch in anderen Fahrzeuganwendungen einsetzbar.

Gemäß einer alternativen Ausführungsform oder zusätzlich kann die Außenfläche des kegelstumpfförmigen Lagerschilds elektrisch isoliert und lackiert sein. Vorteil hierfür ist, dass ein herkömmlicher isolierender Halteflansch eingesetzt werden kann. Diese Ausführungsform ist insbesondere bei kleinen Stückzahlen vorteilhaft.

Gemäß einer alternativen bevorzugten Ausführungsform ist die Außenfläche des kegelstumpfförmigen Lagerschilds mit elektrisch isolierendem Material angespritzt. Dies hat den Vorteil, dass das elektrisch isolierende Material gegenüber Kratzern, die eine elektrische Isolierung aufheben würden, widerstandsfähiger ist und somit besser vermieden werden kann.

Um die elektrische Maschine an verschiedene Typen von Einbaupositionen an Verbrennungskraftmaschinen anpassen zu können, ist der Halteflansch als ein an der elektrischen Maschine in mindestens zwei Positionen anordenbarer Drehflansch ausgebildet. Somit ist die elektrische Maschine axial in mindestens zwei Positionen als Standardprodukt befestigbar, um an unterschiedliche Typen mit verschiedenen Ausgestaltungen eines vorhandenen Bauraums an der Verbrennungskraftmaschine individuell montiert zu werden.

Es versteht sich, dass die vorstehend genannten und nachstehend noch zu erläuternden Merkmale nicht nur in der jeweils angegebenen Kombination, sondern auch in anderen Kombinationen verwendbar sind.

Die Erfindung wird im Folgenden anhand eines Ausführungsbeispiels unter Bezugnahme auf Zeichnungen näher erläutert. Es zeigen:
- Fig. 1: eine perspektivische Ansicht eines Lagerschilds mit dem erfindungsgemäßen Halteflansch,
- Fig. 2: einen Ausschnitt einer Seitenansicht im Bereich des Befestigungspunktes der elektrischen Maschine mit einer Verbrennungskraftmaschine,
- Fig. 3: ein Lagerschild und einen isolierten Drehflansch im Querschnitt
- Fig. 4: und eine vergrößerte Querschnittsansicht einer isolierten Befestigungsbohrung.

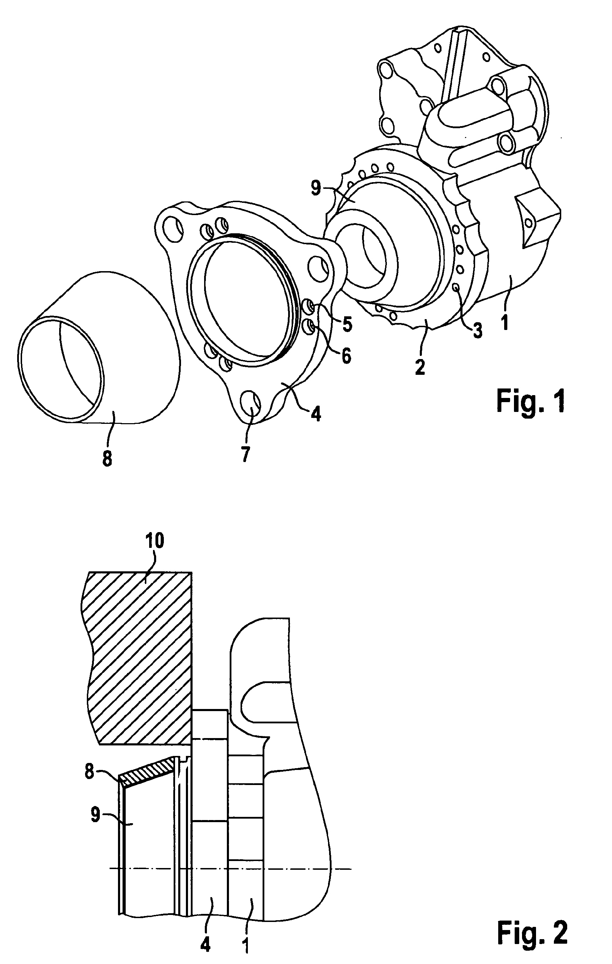

Die Fig. 1 zeigt in einer perspektivischen Ansicht ein Lagerschild 1 einer elektrischen Maschine, wie beispielsweise eines Starters, für eine Verbrennungskraftmaschine. Das Lagerschild 1 ist mit einem kegelstumpfförmigen Bereich 9 ausgebildet. Im Lagerschild 1 befindet sich der vordere Teil eines Einrück-Relais, das ein Ritzel in einen nicht dargestellten Zahnkranz einer Brennkraftmaschine ein- bzw. ausrückt. Das Lagerschild 1 nimmt ein sogenanntes A-Lager auf, das eine Welle mit einem Ritzel, die in der Fig. 1 nicht gezeigt sind, führt. Am Lagerschild 1 befindet sich ein ringförmiger Lagerflansch 2 mit mehreren rotationssymmetrisch versetzten Bohrungen bzw. Gewindebohrungen 3. Die Bohrungen sind rotatorisch zueinander versetzt, um den darauf zu befestigenden Halteflansch 4 rotatorisch beim Einbau drehen zu können, und den Starter an die vorhandenen Bauraumverhältnisse entsprechend anpassen zu können. Der Halteflansch 4 wird deshalb auch als Drehflansch bezeichnet und hat mindestens zwei rotatorisch versetzte Bohrungen 5, 6, um mit den rotatorisch versetzten Bohrungen 3 verschraubt zu werden. Der Halteflansch 4 hat ferner auch drei im Winkel von 120° rotatorisch versetzte Bohrungen 7, in denen der Halteflansch 4 am Verbrennungsmotor befestigt wird. Der Halteflansch 4 ist als elektrisch isolierendes Teil ausgebildet und ist entweder aus einer Keramik, vorzugsweise aus einem Kunststoff, oder aus einem elektrisch isolierenden Verbundwerkstoff hergestellt.

Der erfindungsgemäße Halteflansch 4 weist zudem eine elektrisch isolierende Kappe 8 auf, die in der Fig. 1 als separates Bauteil dargestellt ist. Die Kappe 8 ist in einer bevorzugten Ausführungsform einteilig mit dem Halteflansch 4 verbunden, so dass die Montage vereinfacht ist. Die Kappe 8 verdeckt bei der Montage des Halteflansches 4 einen kegelstumpfförmigen Bereich 9 des Lagerschilds 1, in dem das A-Lager aufgenommen wird. Die Kappe 8 ist somit parallel zum kegelstumpfförmigen Bereich 9 darüber angeordnet.

Die Fig. 2 zeigt in einem vergrößerten Ausschnitt einer aufgeschnittenen Seitenansicht den Bereich eines Befestigungspunktes des Lagerschilds 1 von der elektrischen Maschine mit einem Ausschnitt eines Motorblocks 10, an dem der Starter über den Halteflansch 4 befestigt ist. Die Fig. 2 zeigt deutlich, dass eine Kriechstrecke vom kegelstumpfförmigen Bereich 9 zum Motorblock 10, der am Außenumfang entlang des Halteflansches 4 nur wenige Millimeter groß sein kann, aufgrund der Kappe 8 einen verlängerten bzw. unterbrochenen Kriechweg von mehreren Zentimetern aufweist. Die Kappe 8 ist gemäß einer besonderen Ausführungsform mit dem isolierenden Halteflansch 4 einteilig verbunden und die Kappe 8 ist bis zum Ritzel, das nicht gezeigt ist, vorgezogen.

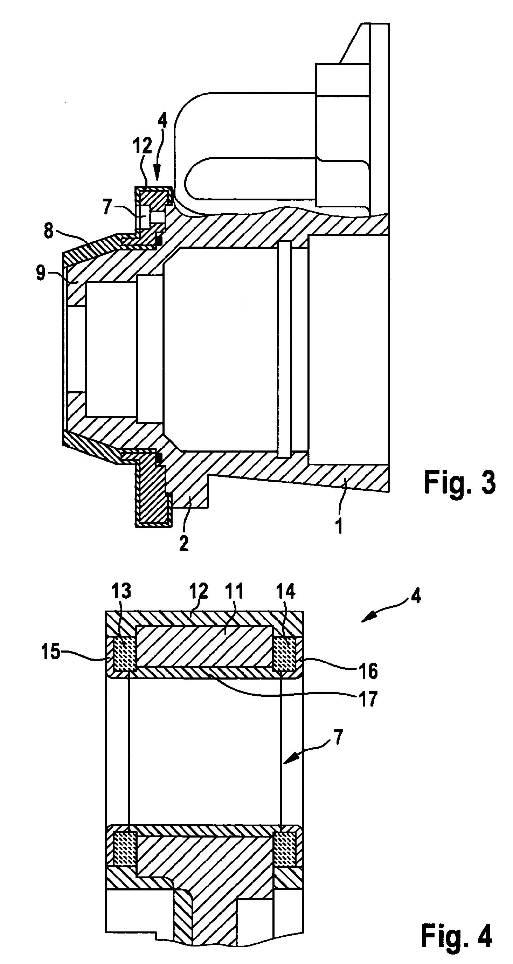

Die Fig. 3 zeigt im Querschnitt gesehen das Lagerschild 1 mit dem Lagerflansch 2, an dem der isolierte Halteflansch 4 mit einer isolierenden Kappe 8 angeordnet ist. Der Halteflansch 4 ist außen mit Kunststoff umspritzt. Die Kunststoffumspritzung des Halteflanschs 4 umfasst die Kappe 8, die im kegelstumpfförmigen Bereich 9 elektrisch isoliert ist.

Die Fig. 4 zeigt in einer vergrößerten Ansicht ein spezielles Ausführungsbeispiel einer Bohrung 7 zur Befestigung des Starters an einer Verbrennungskraftmaschine. Die Gestaltung der Bohrung ist unabhängig von der speziellen Ausgestaltung des Halteflansches 4 mit der Kappe 8. Der Halteflansch 4 hat einen ganz besonderen spezifischen Aufbau, um eine elektrische Isolation zwischen Startern und Verbrennungskraftmaschine zu realisieren. Der isolierte Halteflansch 4 weist einen spezifischen Aufbau auf. Ein Stahlflansch 11 ist von einem Kunststoffmantel 12 umgeben. Stirnseitig bezüglich der Bohrung 7 sind eine Keramik 13 und 14 angeordnet. An den Eingangsseiten der Bohrung 7 sind stirnseitig auf beiden Seiten eine Unterlegscheibe 15, 16 aus Aluminium formschlüssig um die Keramik 13, 14 ausgebildet. Um eine elektrische Isolation der Befestigungsschrauben zu erzielen, ist die zylindrische Innenfläche der Bohrung 7 mit einem Mantel 17 aus Kunststoff ausgebildet. Ein derartiger Aufbau des Halteflansches ist wichtig, um eine elektrische isolierte Verschraubung dauerhaft zu erzielen, da der Kunststoff durch Einwirkung von Wärme und Schüttelvorgängen zu fließen beginnt und sich somit der Starter am Motor lösen könnte, im ungünstigsten Fall bis zum Abfallen des Starters. Die setzfeste Keramik 13, 14 mit Unterlegscheiben 15, 16 aus Aluminium verhindert dies. Alle Figuren zeigen lediglich schematische nicht maßstabsgerechte Darstellungen. Im Übrigen wird insbesondere auf die zeichnerischen Darstellungen für die Erfindung als wesentlich verwiesen.

## Patentansprüche

1. **Starter für eine Verbrennungskraftmaschine mit einem Lagerschild** (1) und einem Halteflansch **(4),** wobei
- der Halteßansch **(4)** als Isolierteil ausgebildet ist und zumindest teilweise aus einem elektrisch isolierenden Material hergestellt ist oder
- der Halteflansch **(4)** ein **darauf** angeordnetes Isolierelement aufweist, wobei das Isolierteil **bzw. Isolierelement** des Halteflansches **(4)** mit einer Kappe (8) über einer Außenfläche eines Lagerschilds **(1)** eines Lagers des **Starters verlängert** ausgebildet ist.

2. **Starter** nach Anspruch 1, **dadurch gekennzeichnet, dass** die Kappe (8) entsprechend der äußeren Form des Lagerschilds (1) kegelstumpfförmig und parallel über diesem angeordnet ist und insbesondere bis zu einem Ritzel vorgezogen ist.

3. **Starter** nach Anspruch 1 oder 2, **dadurch gekennzeichnet, dass** der Halteflansch (4) mit der Kappe (8) einteilig hergestellt ist.

4. **Starter** nach Anspruch 1 oder 2, dadurch **gekennzelchnet, dass** der Halteflansch (4) mit der Kappe (8) zweiteilig hergestellt ist.

5. **Starter** nach einem oder mehreren der vorhergehenden Ansprüche 1 bis 4, **dadurch gekennzeichnet, dass** der Halteflansch (4) und die Kappe (8) aus einem elektrisch isolierenden Material, insbesondere Keramik, Kunststoff und/oder aus einem elektrisch isolierenden Verbundwerkstoff hergestellt ist.

6. **Starter** mit einem Gehäuse und mit einem Lagerschild (1), an dem ein Befestigungsflansch (2) mit einem elektrisch isolierenden Halteflansch (4) zur Befestigung an der Verbrennungskraftmaschine ausgebildet ist **dadurch gekennzeichnet, dass** die Außenfläche des Lagerschilds (1) mittels eines elektrisch isolierenden Überzugsmaterials ausgebildet ist.

7. **Starter** nach **Anspruch** 6, **dadurch gekennzeichnet, dass** die Außenfläche des kegeistumpfformigen Lagerschilds (1) elektrisch isolierend lackiert ist.

8. **Starter** nach einem oder mehreren der vorhergehenden Ansprüche 6 bis 7, **dadurch gekennzeichnet, dass** die Außenfläche des kegelstumpfförmigen Lagerschilds (1) mit elektrisch isolierendem Material angespritzt ist.

9. **Starter** nach einem oder mehreren der vorhergehenden Ansprüche **1** bis **8, dadurch gekennzeichnet, dass** der Halteflansch (4) als ein **am Starter** in mindestens zwei Positionen anordenbarer Drehflansch ausgebildet ist.

## Claims

1. Starter for an internal combustion engine with a bearing plate (1) and a holding flange (4), wherein
- the holding flange (4) is formed as an insulating part and is at least partially produced from an electrically insulating material or
- the holding flange (4) has an insulating element arranged on it, the insulating part or insulating element of the holding flange (4) being formed such that it extends with a cap (8) beyond an outer face of a bearing plate (1) of a bearing of the starter.

2. Starter according to Claim 1, **characterized in that**, in a way corresponding to the outer form of the bearing plate (1), the cap (8) is frustoconical and arranged in parallel above said plate and is drawn forwards in particular as far as a pinion.

3. Starter according to Claim 1 or 2, **characterized in that** the holding flange (4) is produced with the cap (8) as one part.

4. Starter according to Claim 1 or 2, **characterized in that** the holding flange (4) is produced with the cap (8) as two parts.

5. Starter according to one or more of the preceding Claims 1 to 4, **characterized in that** the holding flange (4) and the cap (8) are produced from an electrically insulating material, in particular ceramic, plastic and/or electrically insulating composite material.

6. Starter with a housing and with a bearing plate (1), on which there is formed a fastening flange (2) with an electrically insulating holding flange (4) for fastening to the internal combustion engine, **characterized in that** the outer face of the bearing plate (1) is formed by means of an electrically insulating coating material.

7. Starter according to Claim 6, **characterized in that** the outer face of the frustoconical bearing plate (1) is painted in an electrically insulating manner.

8. Starter according to either or both of the preceding Claims 6 and 7, **characterized in that** the outer face of the frustoconical bearing plate (1) is sprayed with electrically insulating material.

9. Starter according to one or more of the preceding Claims 1 to 8, **characterized in that** the holding flange (4) is formed as a rotary flange which can be arranged in at least two positions on the starter.

## Revendications

1. Démarreur pour moteur à combustion interne, présentant un flasque (1) et une bride de maintien (4),
- la bride de maintien (4) étant configurée comme pièce isolante et étant réalisée au moins en partie en un matériau électriquement isolant ou
- un élément isolant est disposé sur la bride de maintien (4), la partie isolante ou l'élément isolant de la bride de maintien (4) étant prolongé(e) par un bonnet (8) au-delà de la surface extérieure du flasque de montage (1) du support du démarreur.

2. Démarreur selon la revendication 1, **caractérisé en ce que** le bonnet (8) correspond à la forme extérieure du flasque de montage (1), présente la forme d'un tronc de cône, est disposé parallèlement au-dessus du flasque de montage et est en particulier prolongé jusqu'à un pignon.

3. Démarreur selon la revendication 1 ou 2, **caractérisé en ce que** la bride de maintien (4) est réalisée d'un seul tenant avec le bonnet (8).

4. Démarreur selon la revendication 1 ou 2, **caractérisé en ce que** la bride de maintien (4) est réalisée séparément du bonnet (8).

5. Démarreur selon l'une ou plusieurs des revendications 1 à 4 qui précèdent, **caractérisé en ce que** la bride de maintien (4) et le bonnet (8) sont réalisés en un matériau électriquement isolant, en particulier une céramique, une matière synthétique et/ou un matériau composite électriquement isolant.

6. Démarreur doté d'un boîtier et d'un flasque de montage (1) sur lequel une bride de fixation (2) dotée d'une bride de maintien (4) électriquement isolante est formée pour le fixer sur le moteur à combustion interne, **caractérisé en ce que** la surface extérieure du flasque de montage (1) est formée d'un matériau de revêtement électriquement isolant.

7. Démarreur selon la revendication 6, **caractérisé en ce que** la surface extérieure du flasque de montage (1) en forme de tronc de cône est recouverte d'un vernis électriquement isolant.

8. Démarreur selon l'une ou plusieurs des revendications 6 à 7 qui précèdent, **caractérisé en ce qu'**un matériau électriquement isolant est pulvérisé sur la surface extérieure du flasque de montage (1) en forme de tronc de cône.

9. Démarreur selon l'une ou plusieurs des revendications 1 à 8 qui précèdent, **caractérisé en ce que** la bride de maintien (4) est configurée comme bride rotative apte à être placée en au moins deux positions sur le démarreur.
